# EUROPÄISCHE PATENTSCHRIFT

(11) **EP 3 100 482 B1**
(45) Veröffentlichungstag und Bekanntmachung des Hinweises auf die Patenterteilung: **04.03.2020**
(21) Anmeldenummer: 15704729.1
(22) Anmeldetag: 27.01.2015
(51) Int. Cl.: G08C 23/04, H04L 12/28, H04W 12/08, G05B 15/02, H04W 12/04, G08C 17/02

(54) **RAUMKONTROLLGERÄT**
ROOM CONTROL DEVICE
APPAREIL DE COMMANDE DE PIÈCE

(30) Priorität: 28.01.2014 DE 102014201468
(43) Veröffentlichungstag der Anmeldung: 07.12.2016
(73) Patentinhaber: Siemens Schweiz AG, 8047 Zürich (CH)
(72) Erfinder: BODENSTEINER, Andreas, 92648 Vohenstrauß (DE); SCHIEKOFER, Thomas, 93107 Wolkering (DE)
(74) Vertreter: Maier, Daniel Oliver
(86) Internationale Anmeldenummer: PCT/EP2015/051587
(87) Internationale Veröffentlichungsnummer: WO 2015/113965

(56) Entgegenhaltungen:
- EP-A1- 2 495 909
- US-A1- 2006 208 088
- US-A1- 2013 292 460

## Beschreibung

Die Erfindung betrifft ein Steuergerät und ein tragbares mobiles Kommunikationsendgerät zur Steuerung von Komfortgrössen eines Raumes. Weiterhin betrifft die Erfindung eine Anordnung und ein Verfahren zur zeitlich und/oder örtlich begrenzten Steuerung von Komfortgrössen eines Raumes über ein mobiles Gerät eines Benutzers.

Es ist bekannt, dass Funktionen der Haus- oder Gebäudesteuerung über ein tragbares mobiles Kommunikationsendgerät (z.B. Smartphone oder Tablet-Computer) eines Benutzers durchführbar sind. So ist es z.B. bekannt, dass ein Benutzer mit einem Smartphone oder Tablet-Computer (mit entsprechender Software) die Beleuchtung, die Jalousien oder die Temperatur in einem Gebäude steuern kann.

Die Firma Jung bietet z.B. ein System an, bei dem die Kommunikation zwischen dem mobilen Gerät und der Gebäudesteuerung auf Bluetooth basiert. Der Zugriffsschutz erfolgt dabei über eine feste PIN-Nummer über das sogenannte Bluetooth-Pairing. Dieses Verfahren ist aber aufwändig und unsicher.

US 2013/292460 A1 und EP 2 495 909 A1 gehören ebenso zum relevanten Stand der Technik.

Ein mobiles Gerät (z.B. Smartphone) mit Webbrowser kann auch Funktionen in einem Gebäudeautomatisierungssystem über einen Web-Server und WLAN bedienen, z.B. der IP Viewer N 151 der Firma Siemens. Der Zugriffsschutz erfolgt hierbei über Benutzername und Passwort. Die Zugangsdaten wie URL, Benutzername und Passwort müssen einem Benutzer bekannt sein. Dieses Zugangsverfahren ist aufwändig und unflexibel.

Es ist daher die Aufgabe der vorliegenden Erfindung, für einen Benutzer ein Steuergerät und ein mobiles Kommunikationsendgerät zur einfachen Steuerung von Komfortgrössen eines Raumes bereitzustellen. Weiterhin ist es Aufgabe der vorliegenden Erfindung eine Anordnung und ein Verfahren für eine einfache zeitlich und/oder örtlich begrenzte Steuerung von Komfortgrössen eines Raumes über ein mobiles Gerät eines Benutzers bereitzustellen.

Die Aufgabe wird gelöst durch ein Steuergerät zur Steuerung von Komfortgrössen eines Raumes, das Steuergerät umfassend:
eine Eingabevorrichtung zum benutzerseitigen Anfordern eines Freischaltcodes für ein mobiles Gerät;
eine Ausgabevorrichtung zur Bereitstellung des angeforderten Freischaltcodes;
eine Empfangsvorrichtung zum Empfangen von, auf Basis des Freischaltcodes als gültig anerkannten, Steuerdaten zur Einstellung der Komfortgrössen. Dadurch dass der Freischaltcode nur lokal auf der Ausgabevorrichtung des Steuergerätes zur Verfügung gestellt wird, ist sichergestellt, dass nur ein sich vor Ort befindlicher Benutzer den Freischaltcode für ein mobiles Gerät (z.B. Smartphone, Tablet-Computer) verwenden kann. Somit ist ein gesicherter Zugang zu den Bedienfunktionen zur Steuerung von Komfortgrössen eines bestimmten Raumes sichergestellt. Ein Freischaltcode wird nur nach einer benutzerseitigen Anforderung, d.h. nur "on-demand" durch eine Interaktion des Benutzers generiert und ausgegeben. Auch dadurch wird ein Missbrauch verhindert und der Zugangsschutz gesteigert. Ein weiterer Vorteil liegt darin, dass ein Benutzer sein eigenes mobiles Gerät (z.B. Smartphone) zur Steuerung von Komfortgrössen (z.B. Temperatur, Licht, Lüftung) eines Raumes verwenden kann und kein aufwändiges vorheriges Anmelde- oder Registrierverfahren nötig ist. Mit Vorteil ist der Freischaltcode zeitlich (relativ oder absolut) und/oder örtlich für einen Benutzer begrenzt. Ein weiterer Benutzer muss einen neuen Freischaltcode anfordern. Der Freischaltcode kann z.B. durch einen Zufallszahlengenerator von einem Mikroprozessor generiert werden. Bei der Eingabevorrichtung zum benutzerseitigen Anfordern eines Freischaltcodes kann es sich z.B. um einen Taster handeln, der vom Benutzer zu bedienen ist.

Eine erste vorteilhafte Ausgestaltung der Erfindung liegt darin, dass das Steuergerät eine Sendevorrichtung zur Kommunikation mit dem mobilen Gerät umfasst. Dadurch können dem Benutzer weitere Informationen zur Steuerung der verfügbaren Komfortgrössen oder der im Raum verfügbaren Infrastruktur zur Beeinflussung der Komfortgrössen auf dem mobilen Gerät bereitgestellt werden. Weiterhin ist es möglich über die Sendevorrichtung einen angeforderten Freischaltcode elektronisch auf das mobile Gerät des Benutzers zu übertragen. Die Kommunikation zwischen der Sendevorrichtung des Steuergerätes und dem mobilen Gerät kann z.B. über WLAN, NFC (Near Field Communication, wie z.B. RFID), IR (Infrarot) oder Bluetooth erfolgen.

Eine weitere vorteilhafte Ausgestaltung der Erfindung liegt darin, dass die Kommunikationsverbindung zwischen dem mobilen Gerät und dem Steuergerät zeitlich und/oder örtlich auf den Raum begrenzbar ist. Ein Benutzer kann nur für einen solchen Raum die Komfortgrössen einstellen, für den er sich über den entsprechenden Freischaltcode mit dem entsprechenden Steuergerät (Raumkontrollgerät) verbunden hat. Mit Vorteil ist ein Freischaltcode nur für eine definierte Zeitspanne gültig. Z.B. für eine definierte Zeitspanne ab Anmeldung (z.B. 2h) und/oder bis zu einem absoluten Zeitpunkt, wie z.B. bis 24:00 Uhr.

Eine weitere vorteilhafte Ausgestaltung der Erfindung liegt darin, dass der Freischaltcode auf der Ausgabevorrichtung (z.B. Display) alphanumerisch und/oder grafisch darstellbar ist. Der angeforderte Freischaltcode kann z.B. als QR-Code oder als Barcode auf einem Display der Ausgabevorrichtung dargestellt und von dort direkt vom mobilen Gerät eingelesen werden. Dies kann z.B. durch die Kamera und/oder eine Scan-App des mobilen Gerätes erfolgen. Ein alphanumerischer Freischaltcode kann z.B. über einen OCR-Lesemechanismus (z.B. App) vom mobilen Gerät eingelesen werden.

Eine weitere vorteilhafte Ausgestaltung der Erfindung liegt darin, dass der Freischaltcode über die Sendevorrichtung vom Raumkontrollgerät auf das mobile Gerät übertragbar ist. Der Freischaltcode kann z.B. über WLAN, NFC (Near Field Communication, wie z.B. RFID), IR (Infrarot) oder Bluetooth auf das mobile Gerät für den Benutzer komfortabel übertragen werden. Der Vorteil dabei ist, dass der Benutzer den Freischaltcode an der Ausgabevorrichtung nicht physikalisch auf das mobile Gerät einlesen muss.

Eine weitere vorteilhafte Ausgestaltung der Erfindung liegt darin, dass über die Eingabevorrichtung am Steuergerät oder durch eine Kommunikationsschnittstelle des Steuergerätes mit einem verbundenen Gebäudeautomatisierungssystem eine Verbindung eines Steuergerätes mit einem freigeschalteten mobilen Geräten trennbar ist.

Eine weitere vorteilhafte Ausgestaltung der Erfindung liegt darin, dass über eine Vorrichtung am Steuergerät oder durch eine Kommunikationsschnittstelle des Steuergerätes mit einem verbundenen Gebäudeautomatisierungssystem eine Verbindung eines Steuergerätes mit einem freigeschalteten mobilen Gerät trennbar ist. Bestehende Verbindungen können einzeln oder komplett (alle) getrennt werden. Zum Beispiel können über einen Disconnect-Button/Trenntaster (z.B. ein Eingabeknopf) am Steuergerät (Raumkontroller) alle oder einzelne bestehende Verbindungen getrennt werden. Diese Trenn-Funktionalität kann optional auch durch ein Gebäudeautomatisierungssystem, mit dem das Steuergerät verbunden ist, aufgerufen werden (z.B. KNX Taster). Dadurch ist gewährleistet, dass z.B. in Besprechungsräumen nur die anwesenden Personen Zugriff auf die Steuerung des Raumes haben. Bei dem Trenntaster kann es sich um einen separaten Taster handeln. Es ist aber auch möglich, dass die vorhandene Eingabevorrichtung zur Anforderung des Freischaltcodes auch als Trenntaster verwendbar ist. Z.B. könnte durch ein kurz aufeinander folgendes zweimaliges Betätigen des Tasters (Doppelklick) zur Anforderung des Freischaltcodes oder durch ein langes Betätigen dieses Tasters (z.B. mindestens 5 Sekunden) das Steuergerät in einen Trennmodus wechseln. Mit Vorteil werden dazu auf der Ausgabevorrichtung des Steuergerätes alle durch den Freischaltcode aktivierten im Raum vorhandenen mobilen Geräte (z.B. Smartphones) angezeigt. Mit Vorteil können durch entsprechende Benutzereingaben (z.B. durch Markierung über eine Touch-Funktionalität) an der Ausgabevorrichtung (z.B. Touchfähiges Display, Berührungsbildschirm) ausgewählt und vom entsprechenden Steuergerät getrennt werden.

Die Aufgabe wird weiterhin gelöst durch ein tragbares mobiles Kommunikationsendgerät, insbesondere ein Smartphone oder einen Tablet-Computer, zur Steuerung von Komfortgrössen eines Raumes über ein in diesem Raum angebrachtes Raumkontrollgerät, wobei durch Eingabe eines von einem Benutzer am Raumkontrollgerät anforderbaren Freischaltcodes am mobilen Gerät dieses für eine ortsabhängige Steuerung der Komfortgrössen des Raumes und/oder für eine ortsabhängige Visualisierung der im Raum steuerbaren Komfortgrössen freischaltbar ist. Dadurch ist die Steuerung der Komfortgrössen (z.B. Temperatur, Beleuchtung, Klima) durch ein nicht zum Raum oder zum Gebäude gehörendes mobiles Gerät möglich, d.h. Geräte aus dem Eigentum eines Benutzers können zur Steuerung der Komfortgrössen verwendet werden. Dies ermöglicht u.a. Kostenvorteile bei der Infrastruktur der Räume.

Eine weitere vorteilhafte Ausgestaltung der Erfindung liegt darin, dass das mobile Gerät ein Steuerprogramm (App) zur Steuerung der Raumkomfortgrössen und/oder zur Bedienung von im Raum befindlicher Infrastruktur umfasst, wobei das Steuerprogramm (App) vom Raumkontrollgerät auf das Kommunikationsendgerät übertragbar ist und eine auf die Infrastruktur des Raumes abgestimmte Benutzeroberfläche bereitstellt. Das Steuerprogramm (App) kann z.B. von einem Webserver des Steuergerätes auf das mobile Gerät des Benutzers geladen werden (durch Download). Mit Vorteil erfolgt ein Download der Benutzeroberfläche nur auf mobile Geräte mit einem gültigen Freischaltcode. Die Bereitstellung einer auf die Infrastruktur des jeweiligen Raumes abgestimmten Benutzeroberfläche ermöglicht eine kontextsensitive Benutzerschnittstelle hinsichtlich der im jeweiligen Raum möglichen Steuerfunktionalität bezüglich der Komfortgrössen. So kann die Benutzerschnittstelle eine auf den jeweiligen Raum bezogene ortsabhängige Ikonisierung aufweisen. So können z.B. entsprechende Bedienelemente zur Steuerung der jeweiligen Komfortgrössen dargestellt werden. Prinzipiell kann die Benutzeroberfläche auch nur zur Visualisierung des Raumes (z.B. auch ohne Steuerfunktion) verwendet werden. Bedienelemente für Steuerfunktionen können z.B. ein-/ausgeblendet werden. Die Darstellung der Anzeige- und Bedienelemente in der App kann z.B. auf Basis eines Raumgrundrisses und/oder als Liste erfolgen.

Eine weitere vorteilhafte Ausgestaltung der Erfindung liegt darin, dass das Steuerprogramm (App) auf den jeweiligen Raum hinsichtlich der Raumkomfortgrössen und/oder der im Raum befindlichen Infrastruktur abgestimmte Komfort-Szenen zur Auswahl für einen Benutzer bereitstellt. Wenn der Raum insbesondere für Präsentationen und Vorträge verwendet wird, kann z.B. eine bereits im System definierte Präsentationsszene auf der Benutzeroberfläche angeboten werden. Bei der Aktivierung der Präsentationsszene werden z.B. die Jalousien heruntergelassen und eine entsprechend geeignete abgedimmte Beleuchtung aktiviert. Ein Benutzer kann mit der App (Benutzeroberfläche) aber auch eine individuelle Szene für den Raum erstellen. Eine individuell erstellte Szene kann über die App als allgemeine Szene für den Raum bereitgestellt werden, oder als eigene individuelle Szene auf dem eigenen mobilen Gerät gespeichert werden. Szenen können einzelne Komfortgrössen betreffen oder die Kombination mehrerer Komfortgrössen.

Die Aufgabe wird weiterhin gelöst durch eine Anordnung zur ortsabhängigen Steuerung von Komfortgrössen eines Raumes, die Anordnung umfassend:
ein im Raum angebrachtes Steuergerät zur Steuerung der Komfortgrössen, wobei das Steuergerät umfasst:
   eine Eingabevorrichtung zum Anfordern eines Freischaltcodes für ein mobiles Gerät;
   eine Ausgabevorrichtung zur Bereitstellung des Freischaltcodes;
   eine Empfangsvorrichtung zum Empfangen von, vom mobilen Gerät gesendeten, Daten zur Steuerung der Komfortgrössen des Raumes;
ein mobiles Gerät, welches durch den Freischaltcode zu einer zeitlich und/oder örtlich begrenzten Kommunikation mit dem Steuergerät aktivierbar ist. Mit Vorteil lässt sich die Anordnung aus sowieso schon vorhandenen Geräten für die Gebäudeautomatisierung erstellen. Weiterhin ist kein eigenes, dem Raum zugeordnetes, mobiles Gerät erforderlich. Mit Vorteil wird als mobiles Gerät ein Benutzergerät (z.B. Smartphone, Tablet-Computer) verwendet.

Die Aufgabe wird weiterhin gelöst durch ein Verfahren zur zeitlich und/oder örtlich begrenzten Steuerung von Komfortgrössen eines Raumes über ein mobiles Gerät eines Benutzers, wobei ein im Raum angebrachtes Steuergerät zur Steuerung der Komfortgrössen vorhanden ist,
wobei über eine Eingabevorrichtung des Steuergerätes ein Freischaltcode für das mobile Gerät vom Bediener abgerufen wird;
wobei der abgerufene Freischaltcode auf das mobile Gerät übermittelt wird, welches dadurch für eine zeitlich und/oder örtlich auf den Raum begrenzte Kommunikation mit dem Steuergerät zur Steuerung der Komfortgrössen des Raumes aktiviert wird. Der Freischaltcode wird zufällig erstellt (z.B. durch einen Zufallszahlengenerator mit einem Mikroprozessor) und für jeden Benutzer neu generiert. Weiterhin ist der Freischaltcode nur lokal in einem Raum verfügbar. Dadurch wird u.a. ein hoher Missbrauchsschutz sichergestellt.

Eine weitere vorteilhafte Ausgestaltung der Erfindung liegt darin, dass kein erneuter Freischaltcode für das mobile Gerät erforderlich ist, wenn das mobile Gerät sich für einen definierten Zeitraum ausserhalb des entsprechenden Raumes befindet. Wird die Near Field Communication (z.B. RFID, IR, Bluetooth) zwischen einem freigeschalteten Gerät und dem Steuergerät bei einem kurzfristigen Verlassen des Raumes unterbrochen, ist die Wiederaufnahme der Verbindung nach Verbindungsabbruch innerhalb einer konfigurierten Zeit, (z.B. 1h) ohne neuen Freischaltcode möglich.

Die Erfindung wird durch die angehängten unabhängigen Ansprüche definiert.

Die Erfindung sowie vorteilhafte Ausführungen der vorliegenden Erfindung werden am Beispiel der nachfolgenden Figuren erläutert. Dabei zeigen:
- FIG 1: eine beispielhafte Prinzipdarstellung einer Anord-nung zur zeitlich und/oder örtlich begrenzten Steu-erung von Komfortgrössen eines Raumes über ein mo-biles Gerät eines Benutzers,
- FIG 2: ein beispielhaftes Ablaufdiagramm zur zeitlich und/oder örtlich begrenzten Steuerung von Komfort-grössen eines Raumes über ein mobiles Gerät eines Benutzers.

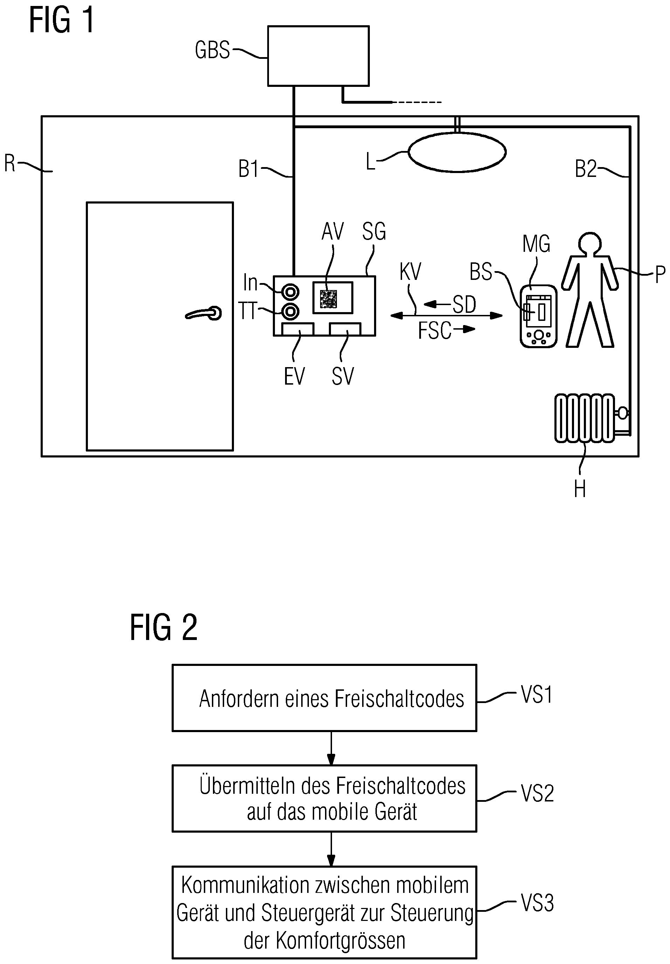

Figur 1 zeigt eine beispielhafte Prinzipdarstellung einer Anordnung zur zeitlich und/oder örtlich begrenzten Steuerung von Komfortgrössen L, H eines Raumes R über ein mobiles Gerät MG eines Benutzers P. Die Anordnung umfasst ein im Raum R angebrachtes Steuergerät SG (Raumkontrollgerät) zur Steuerung der Komfortgrössen (Beleuchtung, Lüftung, Temperatur, Beschattung etc,).

Ein Steuergerät SG (Raumkontrollgerät) ist mit einem Gebäudeautomatisierungssystem GBS (z.B. KNX) verbunden und kann die Steuerung der Geräte L, H im Raum (Licht, Jalousie, Heizung, Klima, ...) durchführen und gegebenenfalls visualisieren. Durch die gestrichelte Linie in Figur 1 ist angedeutet, dass das Gebäudeautomatisierungssystem GBS mit weiteren Raumkontrollgeräten verbunden sein kann, z.B. über geeignete Busverbindungen.

Durch eine drahtlos-Technik (zum Beispiel Bluetooth, NFC) kann eine Verbindung zu einem mobilen Benutzerendgerät MG (vorzugsweise
Smartphone mit entsprechender Applikation für Android, iOS,...) aufgebaut werden. Durch das Raumkontrollgerät SG können die mobilen Endgeräte MG die oben genannte Steuerung der Geräte (z.B. Lampen, Heizung) im Raum R durchführen.

Der Verbindungsaufbau KV zwischen Benutzerendgerät MG und Raumkontroller SG erfolgt durch Interaktion des Benutzers P (z.B. Drücken einer Taste In auf dem Raumkontroller SG). Dadurch wird ein zufälliger Freischaltcode FSC auf dem Display AV des Raumkontroller SG angezeigt. Der Freischaltcode gestattet nach erfolgreichem Verbindungsaufbau den Zugriff auf im Raumkontroller SG hinterlegten Funktionen zur Steuerung der Komfortgrössen (Temperatur, Beleuchtung etc.)des Raumes R. Durch erneutes Drücken wird ein neuer Freischaltcode FSC erzeugt und es können weitere Benutzer P, beziehungsweise Endgeräte MG hinzugefügt werden.

Mit Vorteil ist das Steuergerät SG (Raumkontrollgerät) über eine Busverbindung B1, B2 mit dem Gebäudeautomatisierungssystem GBS und den zu steuernden Geräten L, H verbunden. In der Darstellung gemäss Figur 1 sind als beispielhafte Geräte eine Beleuchtung L und eine Heizung H dargestellt. Es ist offensichtlich, dass in einem Raum R prinzipiell noch weitere oder andere Geräte zur Steuerung der Komfortgrössen (z.B. Lüftung) vorhanden sein können.

Das Steuergerät SG (Raumkontrollgerät) umfasst eine Eingabevorrichtung In (z.B. ein Taster) zum Anfordern eines Freischaltcodes FSC für ein mobiles Gerät MG (z.B. Smartphone Tablet-Computer); eine Ausgabevorrichtung AV (z.B. ein Display) zur Bereitstellung des Freischaltcodes FSC; eine Empfangsvorrichtung EV zum Empfangen von, vom mobilen Gerät MG gesendeten, Daten SD zur Steuerung bzw. der Einstellung der Komfortgrössen L, H des Raumes R.

Die Eingabevorrichtung In kann aber auch ein geeigneter Funkempfänger (z.B. Bluetooth) sein, der wiederholt die Anwesenheit von mobilen Funkempfängern (z.B. Smartphones) MG erkennt. Mit Vorteil weist die als Funkempfänger ausgebildete Eingabevorrichtung In erkannte mobile Funkempfänger (Kommunikationsendgeräte) MG darauf hin, dass ein Freischaltcode FSC angefordert werden kann. Dies kann z.B. durch eine SMS erfolgen. Ein Benutzer P eines mobilen Kommunikationsendgerätes MG kann dann mit dem mobilen Kommunikationsendgerät MG den Freischaltcode FSC über Funk anfordern und über Funk einlesen.

Dies kann bei NFC in einer Entfernung von wenigen cm und bei Bluetooth in einer Entfernung von wenigen Metern zwischen Steuergerät SG und Kommunikationsendgerät MG erfolgen.

Der angeforderte Freischaltcode kann z.B. als QR-Code oder als Barcode auf einem Display der Ausgabevorrichtung AV dargestellt und von dort direkt vom mobilen Gerät MG eingelesen werden. Dies kann z.B. durch die Kamera und/oder eine Scan-App des mobilen Gerätes MG erfolgen. Ein alphanumerischer Freischaltcode kann z.B. über einen OCR-Lesemechanismus (z.B. App) vom mobilen Gerät MG eingelesen werden.

Mit Vorteil umfasst das Steuergerät SG eine Sendevorrichtung SV zur Kommunikation mit dem mobilen Gerät MG. Die Kommunikation zwischen dem Steuergerät SG und dem mobilen Gerät MG eines Benutzers P kann z.B. über Near Field Communication (NFC) erfolgen, wie zum Beispiel RFID (Radio Frequency Identification oder Bluetooth). Die Kommunikation zwischen dem Steuergerät SG und dem mobilen Gerät MG kann prinzipiell aber auch über IR (Infrarot-Verbindung) oder WLAN erfolgen.

Weiterhin umfasst die Anordnung ein mobiles Gerät MG, welches durch den Freischaltcode FSC zu einer zeitlich und/oder örtlich begrenzten Kommunikation mit dem Steuergerät SG aktivierbar ist.

Das mobile Gerät MG muss nicht zur Infrastruktur (Ausrüstung) des Raumes R gehören. Mit Vorteil handelt es sich beim mobilen Gerät um ein Gerät (z.B. Smartphone, Tablet-Computer) eines Benutzers P.

Der Freischaltcode FSC wird auf Aufforderung (on demand) eines Benutzers P zufällig erstellt (z.B. durch einen Zufallszahlengenerator mit einem Mikroprozessor) und für jeden Benutzer neu generiert. Den Freischaltcode FSC kann nur ein im Raum R befindlicher Benutzer P anfordern und verwenden. Der Freischaltcode FSC kann z.B. durch das Drücken eines Tasters In am Steuergerät SG angefordert werden. Es ist aber auch möglich, dass das Steuergerät SG die mobilen Geräte MG von im Raum R befindlichen Personen P erkennt (z.B. über NFC oder WLAN) und auf diese mobilen Geräte eine Meldung sendet, dass ein Freischaltcode FSC zur Steuerung der Komfortgrössen des Raumes anforderbar ist. Bei dieser Ausführungsform kann der Freischaltcode FSC über das mobile Gerät MG direkt angefordert werden und nach Senden durch das Steuergerät direkt auf das mobile Gerät MG zur Aktivierung der Steuerungsfunktionalität geladen werden. Mit Vorteil ist die Gültigkeit des Freischaltcodes FSC zeitlich begrenzt, z.B. durch eine definierte Zeitspanne (z.B. 2h) ab Anforderung und/oder bis zu einem absoluten Zeitpunkt (z.B. 24:00).

Der Freischaltcode FSC ist somit nur lokal in einem Raum R verfügbar. Eine Steuerung der Komfortgrössen ist nur möglich, wenn sich das mobile Gerät (Kommunikationsendgerät) MG im Raum R befindet, d.h. es wird durch das Steuergerät SG permanent überprüft, ob sich ein aktiviertes mobiles Gerät MG noch im Raum R befindet (z.B. durch Überprüfen, ob eine NFC-Verbindung zwischen Steuergerät SG und aktiviertem mobilen Gerät MG noch existiert.

Ein Verbindungsabbruch zwischen Steuergerät SG und einem aktivierten mobilen Gerät MG kann z.B. durch die Einschränkung der Zugriffsrechte auf Funktionen oder einen Abbruch der physikalischen Verbindung erfolgen. Weiter ist eine Trennung der Verbindung bei Abwesenheit des Clients, d.h. des aktivierten mobilen Gerätes MG mit parametrierbarem Timeout möglich (z.B. bei kurzfristigem Verlassen des Raumes). In diesem Fall ist die Wiederaufnahme der Verbindung nach Verbindungsabbruch (z.B. Bluetooth-Verbindung) innerhalb einer konfigurierten Zeit, z.B. 1h, ohne neuen Freischaltcode möglich.

Eine vorteilhafte Ausgestaltung der Erfindung liegt darin, dass das mobile Gerät MG ein Steuerprogramm (App) zur Steuerung der Raumkomfortgrössen und/oder zur Bedienung von im Raum befindlicher Infrastruktur umfasst, wobei das Steuerprogramm (App) vom Raumkontrollgerät auf das Kommunikationsendgerät MG (mobiles Gerät, z.B. Smartphone) übertragbar ist und eine auf die Infrastruktur des Raumes R abgestimmte Benutzeroberfläche BS bereitstellt.

Die Benutzeroberfläche BS kann z.B. als Applikation (App) auf dem mobilen Endgerät MG erfolgen. Hierbei überträgt der Raumkontroller (Steuergerät) SG die Vorgaben des Designs. Bei erfolgreichem Verbindungsaufbau werden die Anzeige- und Bedienelemente, die für den Raum R zur Verfügung stehen, übertragen. Hierbei können z.B. mittels einer Beschreibungssprache (z.B. HTML) Grafiken und Events (z.B. Touchflächen) festgelegt werden. Optional können auch nur ID's und Koordinaten von bereits in der App festgelegten Bedienelementen übertragen werden. Neue Bedienelemente erfordern in diesem Fall ein Update der App. Die Darstellung der Anzeige- und Bedienelemente in der App kann auf Basis eines Raumgrundrisses und/oder als Liste erfolgen. Mit Vorteil enthält die App auch Zugangsdaten und/oder Zugangspfade zu Infrastruktur bzw. Webseiten die Services bieten, die vom Raum R aus von einem Benutzer P sinnvollerweise aufrufbar sind (z.B. Kantine des Standortes, Pförtner, Security-Personal, Room-Service, Haustechnik etc).

Die Bereitstellung einer auf die Infrastruktur des jeweiligen Raumes R abgestimmten Benutzeroberfläche ermöglicht eine kontextsensitive Benutzerschnittstelle BS hinsichtlich der im jeweiligen Raum R möglichen Steuerfunktionalität bezüglich der Komfortgrössen (Temperatur, Licht etc). So kann die Benutzerschnittstelle BS eine auf den jeweiligen Raum R bezogene adäquate ortsabhängige Ikonisierung (Symbole, adäquate Bedienelemente, etc.) aufweisen. So können z.B. entsprechende Bedienelemente zur Steuerung der jeweiligen Komfortgrössen dargestellt werden.

Die Datenverbindung (z. mobilen Gerät MG und Steuergerät SG) erfolgt, indem die App Rückmeldung an den Raumkontroller SG über getätigte Userinteraktionen (z.B. Touch - Licht schalten) gibt. Der Raumkontroller SG wiederum sendet Rückmeldungen an die App über Statusmeldungen (z.B. Jalousie-Stand, Raumtemperatur).

Die Bedienelemente der Benutzerschnittstelle BS können zum Beispiel auch eine Szene (KNX-Szenensteuerung) beinhalten. Hierbei kann der Benutzer P in seinem mobilen Endgerät MG Szenen für den Raum R speichern. Verbindet sich der Benutzer P erneut mit dem Raumkontroller SG, hat er die Möglichkeit, bereits gespeicherte Szenen wieder abzurufen (z.B. Szene Vortrag). Der Benutzer P hat aber auch die Möglichkeit, eigene individuelle Szenen für den Raum für das Steuergerät (Raumkontroller) SG bereitzustellen.

Mit Vorteil können über einen Trenntaster TT (Disconnect-Button) am Raumkontroller SG alle Verbindungen KV zu aktivierten mobilen Geräten MG des Raumes R getrennt werden. Diese Funktionalität kann optional auch durch ein Gebäudeautomatisierungssystem GBS aufgerufen werden (z.B. KNX Taster). Dadurch ist gewährleistet, dass z.B. in Besprechungsräumen nur die anwesenden Personen P Zugriff auf die Steuerung des Raumes R haben.

Prinzipiell können über den Trenntaster TT (Disconnect-Button) oder durch das Gebäudeautomatisierungssystem GBS auch selektiv Verbindungen KV zu einzelnen mobilen Geräten MG getrennt werden.

Figur 2 zeigt ein beispielhaftes Ablaufdiagramm für ein Verfahren zur zeitlich und/oder örtlich begrenzten Steuerung von Komfortgrössen eines Raumes über ein mobiles Gerät eines Benutzers, wobei ein im Raum angebrachtes Steuergerät zur Steuerung der Komfortgrössen vorhanden ist,
wobei über eine Eingabevorrichtung des Steuergerätes ein Freischaltcode für das mobile Gerät vom Bediener abgerufen wird (VS1, Anfordern eines Freischaltcodes);
wobei der abgerufene Freischaltcode auf das mobile Gerät übermittelt wird (VS2, Übermitteln des Freischaltcodes auf das mobile Gerät), welches dadurch für eine zeitlich und/oder örtlich auf den Raum begrenzte Kommunikation mit dem Steuergerät zur Steuerung der Komfortgrössen des Raumes aktiviert wird (VS3, Kommunikation zwischen mobilen Gerät und Steuergerät zur Steuerung der Komfortgrössen).

Optional ist beim Verfahren kein erneuter Freischaltcode für das mobile Gerät erforderlich ist, wenn das mobile Gerät sich für einen definierten Zeitraum ausserhalb des entsprechenden Raumes befindet.

Das Verfahren basiert auf der Interaktion von Steuergerät und mobilen Gerät (z.B. Smartphone) eines Benutzers auf Basis üblicherweise vorhandenen Near Field Kommunikationsmechanismen (NFC, Bluetooth etc.) oder einer WLAN Verbindung. Das Steuergerät enthält üblicherweise einen Mikroprozessor und ist mit einem Gebäudeautomatisierungssystem (z.B. KNX) verbunden, um die vom mobilen Gerät empfangenen Steuerdaten an die entsprechende Aktuatorik (Aktorik) zur Ansteuerung der Komfortgrössen (Temperatur, Licht, etc.) weiterzuleiten. Dies erfolgt über geeignete Busverbindungen (drahtgebunden oder drahtlos (z.B. Funk)).

Anordnung und Verfahren zur zeitlich und/oder örtlich begrenzten Steuerung von Komfortgrössen eines Raumes über ein mobiles Gerät eines Benutzers, Z.B. Smartphone oder Tablet-Computer, wobei das mobile Gerät nicht zur Infrastruktur das Raumes gehört, sondern sich im Eigentum bzw. Besitz des Benutzers befindet. Durch einen nur lokal verfügbaren Freischaltcode erfolgt ein sicherer Zugang zu Kontrollfunktionalitäten (z.B. Temperatursteuerung, Lüftungssteuerung) eines für den Raum zuständigen Gebäudeautomatisierungssystems.

### Bezugszeichen

- R: Raum
- SG: Steuergerät
- TT: Trenntaste
- In: Eingabevorrichtung
- AV: Ausgabevorrichtung
- EV: Empfangsvorrichtung
- SV: Sendevorrichtung
- MG: Mobiles Gerät
- BS: Benutzerschnittstelle
- SD: Steuerdaten
- KV: Kommunikationsverbindung
- FSC: Freischaltcode
- GBS: Gebäudeautomatisierungssystem
- B1, B2: Bus
- L: Beleuchtung
- H: Heizung
- P: Benutzer
- VS1 - VS3: Verfahrensschritt

## Patentansprüche

1. Steuergerät (SG) zur Steuerung von Komfortgrössen eines Raumes (R), das Steuergerät (SG) umfassend:
eine Eingabevorrichtung (In) zum benutzerseitigen Anfordern eines Freischaltcodes (FSC) für ein mobiles Gerät (MG);
eine Ausgabevorrichtung (AV) zur Bereitstellung des angeforderten Freischaltcodes;
eine Empfangsvorrichtung (EV) zum Empfangen von, auf Basis des Freischaltcodes (FSC) als gültig anerkannten, Steuerdaten (SD) zur Einstellung der Komfortgrössen, wobei das Steuergerät (SG) einen von einem Benutzer bedienbaren Taster (In, TT) umfasst, wobei der Taster (In, TT) eingerichtet ist, dass bei Betätigen des Tasters Verbindungen des Steuergerätes (SG) mit freigeschalteten mobilen Geräten (MG) einzeln getrennt werden;
eine Sendevorrichtung (SV) zur Kommunikation mit dem mobilen Gerät (MG), wobei die Kommunikationsverbindung (KV) zwischen dem mobilen Gerät (MG) und dem Steuergerät (SG) zeitlich auf den Raum (R) begrenzbar ist, und wobei kein erneuter Freischaltcode (FSC) für das mobile Gerät (MG) erforderlich ist, wenn das mobile Gerät sich für einen definierten Zeitraum ausserhalb des entsprechenden Raumes (R) befindet, wobei der Freischaltcode nur lokal in einem Raum verfügbar ist, durch Darstellung des Freischaltcodes (FSC) auf einem Display der Ausgabevorrichtung (AV).

2. Steuergerät (SG) nach Anspruch 1, wobei der Freischaltcode (FSC) auf der Ausgabevorrichtung (AV) alphanumerisch und/oder grafisch darstellbar ist.

3. Steuergerät (SG) nach einem der vorherigen Ansprüche, wobei der Freischaltcode (FSC) über die Sendevorrichtung (SV) vom Steuergerät (SG) auf das mobile Gerät (MG) übertragbar ist.

4. Anordnung zur ortsabhängigen Steuerung von Komfortgrössen eines Raumes (R), die Anordnung umfassend:
ein im Raum (R) angebrachtes Steuergerät (SG) zur Steuerung der Komfortgrössen, wobei das Steuergerät (SG) umfasst:
eine Eingabevorrichtung (In) zum Anfordern eines Freischaltcodes (FSC) für ein mobiles Gerät (MG);
eine Ausgabevorrichtung (AV) zur Bereitstellung des Freischaltcodes (FSC);
eine Empfangsvorrichtung (EV) zum Empfangen von, vom mobilen Gerät (MG) gesendeten, Daten zur Steuerung der Komfortgrössen des Raumes (R);
ein mobiles Gerät (MG), welches durch den Freischaltcode (FSC) zu einer zeitlich begrenzten Kommunikation mit dem Steuergerät (SG) freigeschaltet wird, wobei, das Steuergerät (SG) einen von einem Benutzer bedienbaren Taster (In, TT) umfasst, wobei der Taster (In, TT) eingerichtet ist, dass bei Betätigen des Tasters (In, TT) Verbindungen des Steuergerätes (SG) mit freigeschalteten mobilen Geräten (MG) einzeln getrennt werden, und wobei kein erneuter Freischaltcode (FSC) für das mobile Gerät (MG) erforderlich ist, wenn das mobile Gerät sich für einen definierten Zeitraum ausserhalb des entsprechenden Raumes (R) befindet, wobei der Freischaltcode nur lokal in einem Raum verfügbar ist, durch Darstellung des Freischaltcodes (FSC) auf einem Display der Ausgabevorrichtung (AV).

5. Verfahren zur zeitlich und/oder örtlich begrenzten Steuerung von Komfortgrössen eines Raumes über ein mobiles Gerät (MG) eines Benutzers (P), wobei ein im Raum angebrachtes Steuergerät (SG) zur Steuerung der Komfortgrössen vorhanden ist,
wobei über eine Eingabevorrichtung (In) des Steuergerätes (SG) ein Freischaltcode (FSC) für das mobile Gerät (SG) vom Bediener abgerufen wird (VS1);
wobei der abgerufene Freischaltcode (FSC) auf das mobile Gerät (MG) übermittelt wird (VS2), welches dadurch für eine zeitlich auf den Raum (R) begrenzte Kommunikation mit dem Steuergerät (SG) zur Steuerung der Komfortgrössen des Raumes (R) aktiviert wird (VS3), und wobei bei Betätigen eines von einem Benutzer bedienbaren Taster (In, TT) am Steuergerät (SG) Verbindungen des Steuergerätes (SG) mit freigeschalteten mobilen Geräten (MG) einzeln getrennt werden, und wobei kein erneuter Freischaltcode (FSC) für das mobile Gerät (MG) erforderlich ist, wenn das mobile Gerät sich für einen definierten Zeitraum ausserhalb des entsprechenden Raumes (R) befindet, wobei der Freischaltcode nur lokal in einem Raum verfügbar ist, durch Darstellung des Freischaltcodes (FSC) auf einem Display der Ausgabevorrichtung (AV).

## Claims

1. Control device (SG) for controlling comfort variables of a room (R), the control device (SG) comprising:
an input apparatus (In) for user-side requesting of an activation code (FSC) for a mobile device (MG);
an output apparatus (AV) for providing the requested activation code;
a receive apparatus (EV) for receiving control data (SD), which has been recognised as valid on the basis of the activation code (FSC), for adjusting the comfort variables, wherein the control device (SG) comprises a button (In, TT) which can be operated by a user, wherein the button (In, TT) is configured that connections of the control device (SG) to activated mobile devices (MG) are severed individually when the button is actuated;
a transmit apparatus (SV) for communicating with the mobile device (MG), wherein the communication connection (KV) between the mobile device (MG) and the control device (SG) is able to be restricted to the room (R) for a time, and wherein no new activation code (FSC) is required for the mobile device (MG) when the mobile device is situated outside of the corresponding room (R) for a defined period of time, wherein the activation code is only available locally in a room, by displaying the activation code (FSC) on a display of the output apparatus (AV).

2. Control device (SG) according to claim 1, wherein the activation code (FSC) is able to be displayed on the output apparatus (AV) alphanumerically and/or graphically.

3. Control device (SG) according to one of the preceding claims, wherein the activation code (FSC) is able to be transferred from the control device (SG) to the mobile device (MG) via the transmit apparatus (SV).

4. Arrangement for the location-dependent controlling of comfort variables of a room (R), the arrangement comprising:
a control device (SG) mounted in the room (R) for controlling the comfort variables, wherein the control device (SG) comprises:
an input apparatus (In) for requesting an activation code (FSC) for a mobile device (MG);
an output apparatus (AV) for providing the activation code (FSC);
a receive apparatus (EV) for receiving data sent by the mobile device (MG) for controlling the comfort variables of the room (R) ;
a mobile device (MG), which is activated by the activation code (FSC) for a temporally restricted communication with the control device (SG), wherein the control device (SG) comprises a button (In, TT) which can be operated by a user, wherein the button (In, TT) is configured such that, when the button (In, TT) is actuated, connections of the control device (SG) to activated mobile devices (MG) are severed individually, and
wherein no new activation code (FSC) is required for the mobile device (MG) when the mobile device is situated outside of the corresponding room (R) for a defined period of time,
wherein the activation code is only available locally in a room, by displaying the activation code (FSC) on a display of the output apparatus (AV).

5. Method for the temporally and/or spatially restricted controlling of comfort variables of a room via a mobile device (MG) of a user (P), wherein a control device (SG) mounted in the room for controlling the comfort variables is present, wherein an activation code (FSC) for the mobile device (SG) is retrieved (VS1) by the operator via an input apparatus (In); wherein the retrieved activation code (FSC) is transmitted to the mobile device (MG), which as a result is activated (VS3) for communication with the control device (SG) for controlling the comfort variables of the room (R), which communication is restricted to the room (R) for a time, and wherein, when a button (In, TT) on the control device (SG) which can be operated by a user is actuated, connections of the control device (SG) to activated mobile devices (MG) are severed individually, and wherein no new activation code (FSC) is required for the mobile device (MG) when the mobile device is situated outside of the corresponding room (R) for a defined period of time, wherein the activation code is only available locally in a room, by displaying the activation code (FSC) on a display of the output apparatus (AV).

## Revendications

1. Appareil de commande (SG) pour le contrôle de grandeurs de confort d'une pièce (R), l'appareil de commande (SG) comprenant :
un dispositif d'entrée (In) pour la demande côté utilisateur d'un code de déverrouillage (FSC) pour un appareil mobile (MG) ;
un dispositif de sortie (AV) pour la mise à disposition du code de déverrouillage demandé ;
un dispositif de réception (EV) pour la réception de données de commande (SD) reconnues comme valides sur la base du code de déverrouillage (FSC), pour le réglage des grandeurs de confort, l'appareil de commande (SG) comprenant un bouton (In, TT) pouvant être actionné par un utilisateur, le bouton (In, TT) étant conçu de façon à ce que, lors de l'actionnement du bouton, les liaisons de l'appareil de commande (SG) avec des appareils mobiles (MG) déverrouillés soient séparées individuellement ;
un dispositif d'émission (SV) pour la communication avec l'appareil mobile (MG), la liaison de communication (KV) entre l'appareil mobile (MG) et l'appareil de commande (SG) pouvant être limitée dans le temps à la pièce (R) et aucun nouveau code de déverrouillage (FSC) n'étant nécessaire pour l'appareil mobile (MG) lorsque l'appareil mobile se trouve pendant un temps défini à l'extérieur de la pièce (R) correspondante, le code de déverrouillage étant disponible localement uniquement dans une pièce, par la représentation du code de déverrouillage (FSC) sur un écran du dispositif de sortie (AV).

2. Appareil de commande (SG) selon la revendication 1, le code de déverrouillage (FSC) pouvant être représenté de manière alphanumérique et/ou graphique sur le dispositif de sortie (AV).

3. Appareil de commande (SG) selon l'une des revendications précédentes, le code de déverrouillage (FSC) pouvant être transmis par l'intermédiaire du dispositif d'émission (SV) par l'appareil de commande (SG) vers l'appareil mobile (MG).

4. Disposition pour la commande locale de grandeurs de confort d'une pièce (R), cette disposition comprenant :
un appareil de commande (SG) monté dans la pièce (R), pour le contrôle des grandeurs de confort, l'appareil de commande (SG) comprenant :
un dispositif d'entrée (In) pour la demande d'un code de déverrouillage (FSC) pour un appareil mobile (MG) ;
un dispositif de sortie (AV) pour la mise à disposition du code de déverrouillage (FSC) ;
un dispositif de réception (EV) pour la réception de données, émises par l'appareil mobile (MG), pour le contrôle des grandeurs de confort de la pièce (R) ;
un appareil mobile (MG), qui est déverrouillé par le code de déverrouillage (FSC) pour une communication limitée dans le temps avec l'appareil de commande (SG), l'appareil de commande (SG) comprenant un bouton (In, TT) pouvant être actionné par un utilisateur, le bouton (In, TT) étant conçu de façon à ce que, lors de l'actionnement du bouton (In, TT), les liaisons de l'appareil de commande (SG) avec des appareils mobiles (MG) déverrouillés soient séparées individuellement, et aucun nouveau code de déverrouillage (FSC) n'étant nécessaire pour l'appareil mobile (MG) lorsque l'appareil mobile se trouve pendant un temps défini à l'extérieur de la pièce (R) correspondante, le code de déverrouillage n'étant disponible que localement dans une pièce par la représentation du code de déverrouillage (FSC) sur un écran du dispositif de sortie (AV).

5. Procédé de commande temporaire et/ou locale de grandeurs de confort d'une pièce par l'intermédiaire d'un appareil mobile (MG) d'un utilisateur (P), un appareil de commande (SG) monté dans la pièce étant prévu pour le contrôle des grandeurs de confort,
un code de déverrouillage (FSC) pour l'appareil mobile (MG) étant appelé par l'utilisateur (VS1) par l'intermédiaire d'un dispositif d'entrée (In) de l'appareil de commande (SG) ;
le code de déverrouillage (FSC) appelé étant transmis (VS2) à l'appareil mobile (MG), qui est ainsi activé (VS3), pour une communication limitée dans le temps à la pièce (R) avec l'appareil de commande (SG) pour le contrôle des grandeurs de confort de la pièce (R) et, lors de l'actionnement d'un bouton (In, TT) pouvant être actionné par un utilisateur sur l'appareil de commande (SG), les liaisons de l'appareil de commande (SG) avec des appareils mobiles (MG) déverrouillés sont séparées individuellement et aucun nouveau code de déverrouillage (FSC) n'étant nécessaire pour l'appareil mobile (MG) lorsque l'appareil mobile se trouve, pendant un temps défini, à l'extérieur de la pièce (R) correspondante, le code de déverrouillage étant disponible uniquement localement dans une pièce par la représentation du code de déverrouillage (FSC) sur un écran du dispositif de sortie (AV).
